# FASCICULE DE BREVET EUROPEEN

(11) **EP 3 336 448 B1**
(45) Date de publication et mention de la délivrance du brevet: **05.06.2019**
(21) Numéro de dépôt: 17206820.7
(22) Date de dépôt: 12.12.2017
(51) Int. Cl.: H02S 30/10, F24S 25/636, F24S 25/67

(54) **DISPOSITIF DE SERRAGE D'UN MODULE PHOTOVOLTAÏQUE À QUATRE MORS**
KLEMMVORRICHTUNG FÜR EIN FOTOVOLTAIKMODUL MIT VIER KLEMMBACKEN
FOUR-JAW DEVICE FOR CLAMPING A PHOTOVOLTAIC MODULE

(30) Priorité: 15.12.2016 FR 1662562
(43) Date de publication de la demande: 20.06.2018
(73) Titulaire: COMMISSARIAT À L'ÉNERGIE ATOMIQUE ET AUX ÉNERGIES ALTERNATIVES, 75015 Paris (FR)
(72) Inventeur: PILAT, Eric, 73100 Brison Saint-Innocent (FR); DAMIANI, Ornella, 73000 Chambery (FR); GUERTIN, Pierre, 86220 Dange (FR)
(74) Mandataire: GIE Innovation Competence Group

(56) Documents cités:
- WO-A2-2012/143811
- DE-B3-102015 202 596
- US-A1- 2015 180 404

## Description

### Domaine de l'Invention

Le domaine de l'invention concerne la fixation, ou le maintien des modules photovoltaïques. Plus particulièrement, le domaine de l'invention est celui des pinces de maintien, ou dispositif de serrage, des modules photovoltaïques.

### Etat de la technique

Dans le domaine, il est connu d'assembler un module photovoltaïque à un châssis de manière à ce que ledit module photovoltaïque soit orienté vers le rayonnement solaire en vue de générer de l'électricité.

Classiquement, il est utilisé des pinces, d'une part, montées au châssis, et, d'autre part, venant serrer localement un bord du module. Généralement, un module est fixé au châssis via plusieurs pinces.

Le module photovoltaïque est soumis à des forces issues de l'environnement extérieur et liées au vent ou la neige. La neige provoque la présence d'une charge sur le module photovoltaïque qui peut l'amener à fléchir, et le vent induit aussi des efforts sur le module photovoltaïque qui peuvent l'amener à se déformer.

Les forces issues de l'environnement extérieur vues par le module photovoltaïque sont maximisées au niveau des pinces, et l'on constate dans certains cas des ruptures du module photovoltaïque au niveau d'une ou plusieurs pinces. Ceci est d'autant plus vrai que l'industrie du module photovoltaïque tend à diminuer les épaisseurs des modules photovoltaïques pour diminuer les coûts de production, mais aussi pour s'adapter à de nouvelles utilisations du photovoltaïque dans des applications où le poids a son importance, comme par exemple dans le domaine du photovoltaïque nomade, dans l'embarqué sur un bateau ou sur une voiture.

Afin de vérifier la solidité d'un module photovoltaïque, il a été mis en place des tests de charge mécanique qui permettent de savoir si un module photovoltaïque est conforme ou pas. Un tel test de charge peut être de monter un module photovoltaïque sur un châssis via des pinces à tester puis d'appliquer progressivement, avant de la maintenir par exemple pendant une heure, une charge de 2400Pa sur la face du module photovoltaïque orientée vers le rayonnement solaire. Cette charge de 2400Pa est répartie uniformément pour valider la résistance au vent, et est appliquée alternativement aux deux faces du module photovoltaïque. Concernant le test de résistance à la neige ou à la glace, un test de charge de 5400Pa sur la face du module photovoltaïque orientée vers le rayonnement solaire peut être réalisé. De tels tests de charge peuvent par exemple être conformes à la norme IEC61215-2:2016-03.

Dans le domaine du photovoltaïque, il existe de nombreuses pinces telles que celles décrites dans les documents DE202011001761, CN204465424 ou US2008250614. Pour absorber une partie des efforts, les mors des pinces peuvent comporter une gomme comme un élastomère tel que décrit dans le document CN204465424. Cependant, de telles pinces demandent à être améliorées pour limiter les contraintes vues, au niveau desdites pinces, par le module photovoltaïque. En effet, les tests sous charge montrent que pour certains types de modules photovoltaïques ne comportant pas de cadre en aluminium, des contraintes maximales vues par le module photovoltaïque sont situées aux bords des pinces et peuvent engendrer la casse du module photovoltaïque. WO2012/143811 décrit un dispositif de serrage pour module photovoltaïque comportant un premier organe et un deuxième organe destinés à venir serrer le module photovoltaïque.

### Objet de l'invention

L'invention a pour but un dispositif de serrage pour module photovoltaïque permettant de mieux absorber les efforts en vue de limiter les contraintes au niveau du serrage du module photovoltaïque, c'est-à-dire de diminuer les contraintes vues par le module photovoltaïque.

On tend vers ce but grâce à un dispositif de serrage pour module photovoltaïque comportant un premier organe et un deuxième organe destinés à venir serrer le module photovoltaïque, ce dispositif de serrage étant caractérisé en ce que le premier organe comporte un premier mors et un deuxième mors, le deuxième organe comporte un premier mors et un deuxième mors, les premiers mors des premier et deuxième organes étant agencés pour serrer entre eux ledit module photovoltaïque et les deuxièmes mors des premier et deuxième organes étant agencés pour serrer entre eux ledit module photovoltaïque, et en ce que le premier organe est configuré de sorte que les premier et deuxième mors dudit premier organe présentent une faculté de mouvement l'un par rapport à l'autre, et le deuxième organe est configuré de sorte que les premier et deuxième mors dudit deuxième organe présentent une faculté de mouvement l'un par rapport à l'autre.

En particulier, les premier et deuxième mors du premier organe sont reliés par un élément de liaison déformable dudit premier organe, et les premier et deuxième mors dudit deuxième organe sont reliés par un élément de liaison déformable dudit deuxième organe.

De préférence, pour chaque élément de liaison :
- ledit élément de liaison comporte une direction d'allongement sensiblement parallèle à un axe X,
- les premier et deuxième mors reliés par ledit élément de liaison comportent chacun un plan de référence d'appui destiné à venir en contact avec le module photovoltaïque,
- le premier mors lié audit élément de liaison comporte un degré de liberté en rotation autour d'un axe Z sensiblement parallèle au plan de référence d'appui du deuxième mors lié audit élément de liaison, ledit axe Z étant sensiblement orthogonal audit axe X.

En particulier, pour chaque élément de liaison, les premiers et deuxièmes mors comportent un degré de liberté en rotation autour de l'axe X correspondant.

Selon une mise en oeuvre, les éléments de liaison du premier organe et du deuxième organe sont en élastomère.

Préférentiellement, le module d'élasticité dudit élastomère est compris entre 10MPa et 500MPa, et notamment entre 30MPa et 100MPa.

Selon une alternative, les éléments de liaison sont formés chacun par une lame comportant du métal.

En particulier, pour chacun des premier et deuxième organes, le premier mors est séparé du deuxième mors d'un écartement compris entre 5mm et 100mm, et plus particulièrement entre 20mm et 40mm.

Selon une mise en oeuvre, le dispositif comporte un système de serrage des mors configuré pour provoquer le serrage du module photovoltaïque par les premiers et deuxièmes mors lorsque ledit système de serrage est sollicité.

En particulier, le système de serrage peut comporter des première, deuxième, troisième et quatrième parties distinctes. La première partie comporte une face liée à l'élément de liaison du premier organe et orientée vers le premier mors du premier organe, et une face orientée vers la troisième partie. La deuxième partie comporte une face liée à l'élément de liaison du premier organe et orientée vers le deuxième mors du premier organe, et une face orientée vers la quatrième partie. La troisième partie comporte une face liée à l'élément de liaison du deuxième organe et orientée vers le premier mors du deuxième organe, et une face orientée vers la première partie. La quatrième partie comporte une face liée à l'élément de liaison du deuxième organe et orientée vers le deuxième mors du deuxième organe, et une face orientée vers la deuxième partie.

De préférence, les premier et deuxième mors du premier organe sont liés à un premier côté de l'élément de liaison du premier organe, et les première et deuxième parties sont liées à un deuxième côté de l'élément de liaison du premier organe opposé audit premier côté de l'élément de liaison du premier organe. Par ailleurs, de préférence, les premier et deuxième mors du deuxième organe sont liés à un premier côté de l'élément de liaison du deuxième organe, et les troisième et quatrième parties sont liées à un deuxième côté de l'élément de liaison du deuxième organe opposé audit premier côté de l'élément de liaison du deuxième organe.

Selon une mise en oeuvre, la première partie peut comporter une ouverture traversante coaxiale d'une ouverture traversante de la troisième partie , et la deuxième partie peut comporter une ouverture traversante coaxiale d'une ouverture traversante de la quatrième partie.

Selon un mode de réalisation particulier, le premier mors et le deuxième mors du premier organe comportent chacun un manchon dans lequel est insérée une partie de l'élément de liaison du premier organe, et les premier et deuxième mors du deuxième organe sont fixés sur une même face d'une plaque, notamment en élastomère, formant l'élément de liaison du deuxième organe, le deuxième organe comportant une première rainure de guidage recevant le manchon du premier mors du premier organe et une deuxième rainure de guidage recevant le manchon du deuxième mors du premier organe.

L'invention est aussi relative à une installation photovoltaïque comportant au moins un module photovoltaïque, l'installation comporte au moins un dispositif de serrage tel que décrit monté d'une part à un châssis, et, d'autre part audit au moins un module photovoltaïque de telle sorte que les premiers et deuxièmes mors dudit dispositif de serrage serrent ledit au moins un module photovoltaïque.

### Description sommaire des figures

L'invention sera mieux comprise à la lecture de la description qui va suivre, donnée uniquement à titre d'exemple non limitatif et faite en se référant aux dessins sur lesquels :
- La figure 1 illustre schématiquement et vue en coupe un dispositif de serrage selon une réalisation de l'invention,
- Les figures 2 à 4 illustrent différentes mises en oeuvre du dispositif de serrage,
- Les figures 5 et 6 illustrent les organes de la figure 2 pris séparément,
- La figure 7 illustre des courbes des contraintes vues par le module photovoltaïque au niveau d'une pince selon l'art antérieur et d'un dispositif de serrage en fonction de l'élastomère utilisé dans le dispositif de serrage en tant qu'éléments de liaison et parties souples des mors,
- La figure 8 illustre une vue en coupe une portion d'une installation photovoltaïque,
- La figure 9 illustre les contraintes vues par le module photovoltaïque suivant l'axe Z en fonction de l'élastomère utilisé dans le dispositif de serrage en tant qu'éléments de liaison et parties souples des mors, chaque courbe étant relative à un écartement donné entre mors.

Dans ces figures, les mêmes références sont utilisées pour désigner les mêmes éléments.

Par ailleurs, les éléments représentés sur les figures ne sont pas nécessairement à l'échelle pour favoriser la compréhension des figures.

### Description de modes particuliers de réalisation

Il est décrit ci-après un dispositif de serrage pour module photovoltaïque. Un tel dispositif de serrage, aussi appelé pince de préhension, est configuré pour venir serrer, notamment localement, le module photovoltaïque. Plusieurs dispositifs de serrage peuvent être utilisés pour monter le module photovoltaïque sur un châssis de support. Le dispositif de serrage décrit ci-après diffère de l'art antérieur en ce qu'il comporte au moins deux couples de mors présentant notamment une faculté de mouvement l'un par rapport à l'autre.

Dans la présente description, par « sensiblement parallèle », on entend parallèle ou parallèle à plus ou moins 10%. Par ailleurs, dans la présente description, par « sensiblement orthogonal » on entend orthogonal ou orthogonal à plus ou moins 10%. En particulier, le terme « orthogonal » peut être remplacé par le terme « perpendiculaire » lorsque des choses orthogonales entre elles sont sécantes.

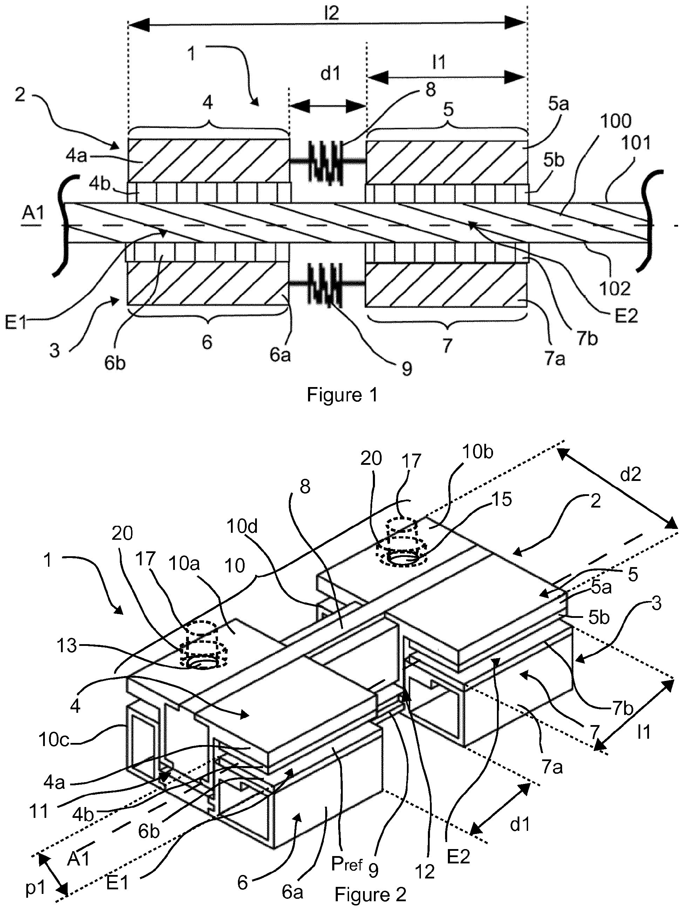

Dans la présente description, un module photovoltaïque, aussi appelé dans le domaine panneau photovoltaïque, comporte une ou plusieurs cellules photovoltaïques reliées électriquement entre elles pour générer de l'énergie lorsqu'elles sont soumises à un rayonnement solaire. Le module photovoltaïque 100 (figure 1) comporte une face avant 101 et une face arrière 102. Les faces avant 101 et arrière 102 sont des faces opposées, c'est-à-dire orientées vers des directions opposées. Les faces avant et arrière 101, 102 sont généralement reliées entre elles par un contour comportant plusieurs bords, notamment appelés bords latéraux, du module photovoltaïque. La face avant 101 du module photovoltaïque 100 est celle destinée à recevoir le rayonnement solaire pour que le module photovoltaïque 100 puisse générer de l'énergie.

Dans la présente description, lorsque l'on parle de deux choses liées (par exemple un élément de liaison par rapport à un mors ou encore une partie par rapport à un élément de liaison), on dit que ces choses sont raccordées entre elles sans préjuger de la manière dont elles sont raccordées. En ce sens, pour deux choses liées, la liaison peut être réalisée par un assemblage mécanique de ces deux choses, par un collage, ou par une continuité de matière entre ces deux choses.

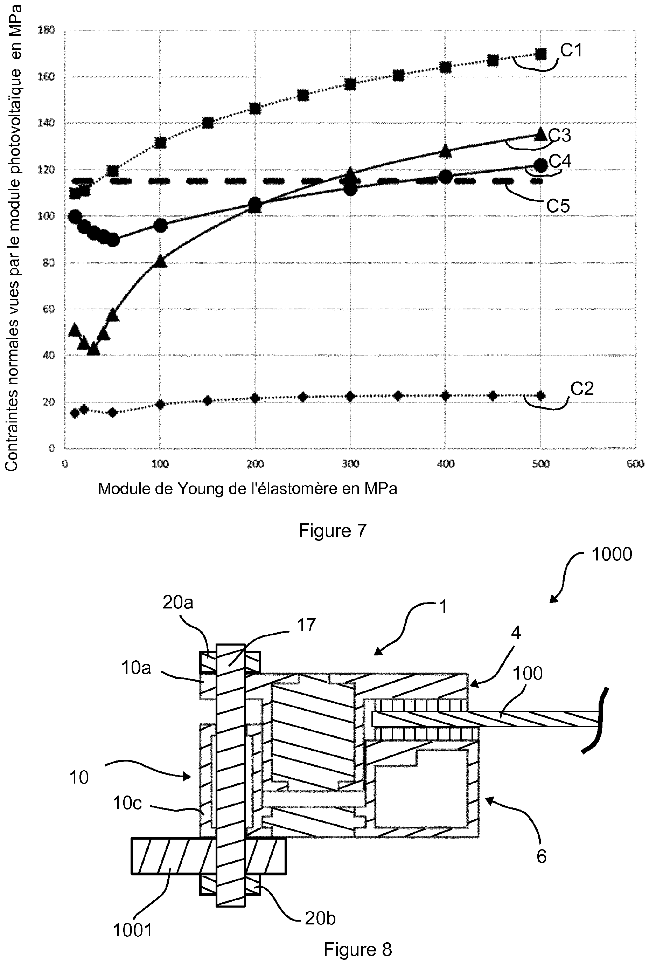

Comme illustré en figures 1 à 4, le dispositif de serrage 1 pour module photovoltaïque 100 comporte un premier organe 2 et un deuxième organe 3. Ces premier et deuxième organes 2, 3 sont destinés à venir serrer, notamment localement, le module photovoltaïque 100 (visible uniquement en figure 1 et en figure 8). Par « serrer localement » on entend que le dispositif de serrage permet de serrer un module sur une petite distance, par exemple comprise entre 45mm et 300mm ou entre 45mm et 400mm, ou encore entre 30mm et 400mm, ceci pouvant être adapté par l'homme du métier en fonction du choix des dimensions des pièces constituant le dispositif de serrage. Le premier organe 2 comporte un premier mors 4 et un deuxième mors 5. Le deuxième organe 3 comporte lui aussi un premier mors 6 et un deuxième mors 7. Bien entendu, on comprend que les premier et deuxième organes 2, 3 sont des éléments distincts. Les premiers mors 4, 6 des premier et deuxième organes 2, 3 sont agencés pour serrer entre eux ledit module photovoltaïque 100 et les deuxièmes mors 5, 7 des premier et deuxième organes 2, 3 sont agencés pour serrer entre eux ledit module photovoltaïque 100. On comprend alors que les premiers et deuxièmes mors 4, 5, 6, 7 sont agencés de sorte à serrer un même module photovoltaïque au niveau d'un bord de ce dernier. Plus particulièrement, on dit que les premiers mors 4, 6 comportent chacun une surface de serrage, aussi appelée plan de référence d'appui P_{ref}, et que les surfaces de serrage des premiers mors 4, 6 sont orientées l'une en direction de l'autre, et que les deuxièmes mors 5, 7 comportent chacun une surface de serrage, ou plan de référence d'appui P_{ref}, et que les surfaces de serrage des deuxièmes mors 5, 7 sont orientées l'une en direction de l'autre.

En particulier, le deuxième mors 5 du premier organe 2 s'étend, notamment selon sa longueur, dans le prolongement du premier mors 4 du premier organe 2 et est situé à distance dudit premier mors 4 du premier organe 2, et le deuxième mors 7 du deuxième organe 3 s'étend, notamment selon sa longueur, dans le prolongement du premier mors 6 du deuxième organe 3 et est situé à distance dudit premier mors 6 du premier organe 3. On dit aussi que le premier mors 4 du premier organe 2 s'étend, notamment selon sa longueur, dans le prolongement du deuxième mors 5 du premier organe 2, que et le premier mors 6 du deuxième organe 3 s'étend, notamment selon sa longueur, dans le prolongement du deuxième mors 7 du deuxième organe 3.

Le dispositif de serrage peut adopter une configuration de serrage dans laquelle il coopère avec un module photovoltaïque 100 qu'il serre (figure 1) : dans ce cas les premiers mors 4, 6 et les deuxièmes mors 5, 7 serrent le module photovoltaïque.

En ce sens, on comprend que le dispositif de serrage 1 peut comporter (figures 1 à 4) un premier espace de serrage E1 dudit module photovoltaïque 100 situé entre le premier mors 4 du premier organe 2 et le premier mors 6 du deuxième organe 3, et un deuxième espace de serrage E2 dudit module photovoltaïque 100 situé entre le deuxième mors 7 du deuxième organe 3 et le deuxième mors 5 du premier organe 2. On dit aussi que les premier et deuxième organes 2, 3 et donc les mors associés, permettent un serrage selon un axe de serrage A1 (figure 1). Chacun des mors s'étendant selon sa longueur de manière sensiblement parallèle à l'axe A1. Cet axe de serrage A1 passe notamment dans les espaces E1 et E2, et est sensiblement parallèle au bord du module photovoltaïque qui est serré par le dispositif de serrage dans la configuration de serrage.

Les premier et deuxième mors 4, 5 du premier organe 2 sont destinés à coopérer avec la face avant 101 du module photovoltaïque 100 et les premier et deuxième mors 6, 7 du deuxième organe 3 sont destinés à coopérer avec la face arrière 102 du module photovoltaïque 100 (figure 1). En particulier, on dit que le premier organe 2 comporte une mâchoire supérieure destinée à coopérer avec une face avant 101 du module photovoltaïque 100 et une mâchoire inférieure destinée à coopérer avec la face arrière 102 du module photovoltaïque 100, dans ce cas la mâchoire supérieure comporte les premier et deuxième mors 4, 5 du premier organe 2 et la mâchoire inférieure comporte les premier et deuxième mors 6, 7 du deuxième organe 3.

Le premier organe 2 est configuré de sorte que les premier et deuxième mors 4, 5 du premier organe 2 présentent une faculté de mouvement l'un par rapport à l'autre. En particulier, ceci est permis par un élément de liaison 8, de préférence déformable, du premier organe 2, lesdits premier et deuxième mors 4, 5 du premier organe 2 étant reliés par cet élément de liaison 8 du premier organe 2. On comprend que la déformation dudit élément de liaison 8 permet un déplacement/mouvement des premier et deuxième mors 4, 5 du premier organe 2 l'un par rapport à l'autre. Autrement dit, la faculté de mouvement des premier et deuxième mors 4, 5 du premier organe 2 est conférée par l'élément de liaison 8 du premier organe 2. Cette faculté de mouvement est notamment limitée au moins en partie par le module d'élasticité du matériau de l'élément de liaison 8 du premier organe 2.

Par ailleurs, le deuxième organe 3 est configuré de sorte que les premier et deuxième mors 6, 7 dudit deuxième organe 3 présentent une faculté de mouvement l'un par rapport à l'autre. En particulier, ceci est permis par un élément de liaison 9, de préférence déformable, du deuxième organe 3, lesdits premier et deuxième mors 6, 7 du deuxième organe 3 étant reliés par l'élément de liaison 9 du deuxième organe 3. On comprend que la déformation dudit élément de liaison 9 permet un déplacement/mouvement des premier et deuxième mors 6, 7 du deuxième organe 3 l'un par rapport à l'autre. Autrement dit, la faculté de mouvement des premier et deuxième mors 6, 7 du deuxième organe 3 est conférée par l'élément de liaison 9 du deuxième organe 3. Cette faculté de mouvement est notamment limitée par le module d'élasticité du matériau utilisé pour former ledit élément de liaison.

En fait, on cherche ici à donner une raideur au système « élément de liaison 8, 9 », du fait de cette raideur, et des charges statiques ou dynamiques subies, l'élément de liaison aura une déformation globale plus ou moins importante. Cette caractéristique de raideur peut s'obtenir en particulier en jouant sur la forme ou les caractéristiques physiques des matériaux utilisés en particulier en élastomère. La principale caractéristique du matériau qui va influer est le module d'élasticité de cet élastomère.

Dans la présente description lorsque l'on parle d'une faculté de mouvement l'un par rapport à l'autre en parlant de mors, on entend que chaque mors peut se déplacer indépendamment de l'autre. Autrement dit, pour chacun des premier et deuxième organes, ledit organe (le cas échéant premier ou deuxième) est configuré de sorte que le premier mors dudit organe (le cas échéant premier ou deuxième) soit mobile, c'est à dire qu'il peut se déplacer, par rapport au deuxième mors dudit organe (le cas échéant premier ou deuxième) et inversement. En ce sens, les termes « présentent une faculté de mouvement l'un par rapport à l'autre » peuvent être remplacés par « sont mobiles l'un par rapport à l'autre ».

En particulier, les éléments de liaison 8, 9 sont configurés chacun pour se déformer suite à une sollicitation du module photovoltaïque appliquée à au moins l'un des premiers ou deuxièmes mors et provoquée par des charges dynamiques ou statiques externes subies par ledit module photovoltaïque comme du vent, le poids de la neige ou des vibrations. Par exemple, lors de conditions de vents très forts équivalents à une charge de 2400Pa, les efforts subis par les mors peuvent varier entre 120MPa et 180MPa, et on peut constater des flèches, sur un panneau photovoltaïque de 3mm d'épaisseur pour des dimensions de 1m par 1,7m, comprises entre 30mm et 70mm.

On comprend alors que le dispositif de serrage est configuré pour se déformer en même temps que le module photovoltaïque qu'il serre de sorte à limiter les contraintes vues par le (c'est-à-dire les contraintes au sein du) module photovoltaïque au niveau de l'interface de ce dernier avec le dispositif de serrage. Ainsi, par « élément de liaison déformable », on entend dans la présente description un élément de liaison qui peut être souple ou flexible de sorte à autoriser les facultés de mouvement évoquées ci-dessus. Autrement dit, cet élément de liaison est capable de se déformer par exemple de fléchir, de subir une torsion sur lui-même, etc. En ce sens, les caractéristiques de l'élément de liaison lui permettent d'accompagner la déformation du module photovoltaïque serré par le dispositif de serrage lorsque ce module photovoltaïque est soumis à des contraintes.

Dans la présente description « une faculté de mouvement » correspond à un déplacement possible selon un ou plusieurs degrés de liberté, chaque degré de liberté pouvant être contraint/limité par les caractéristiques de l'élément de liaison correspondant et d'au moins un effort appliqué sur ce dernier par au moins un des mors et résultant d'au moins un effort appliqué sur ledit au moins un des mors par le module photovoltaïque serré par ledit au moins un des mors.

Le dispositif de serrage est notamment tel que le rapprochement des éléments de liaison 8, 9 entraîne le rapprochement des premiers mors 4, 6 et le rapprochement des deuxièmes mors 5, 7.

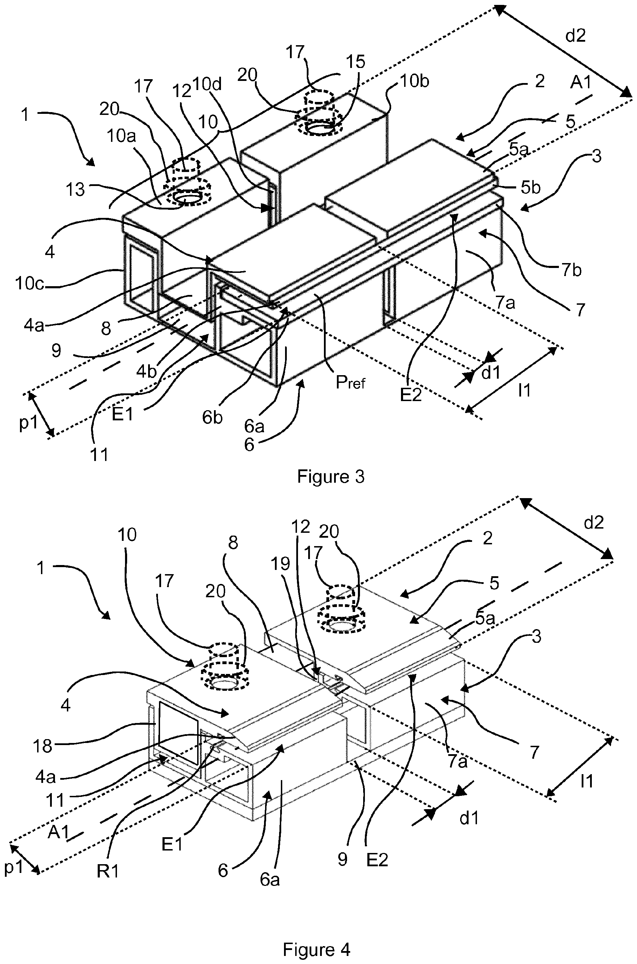

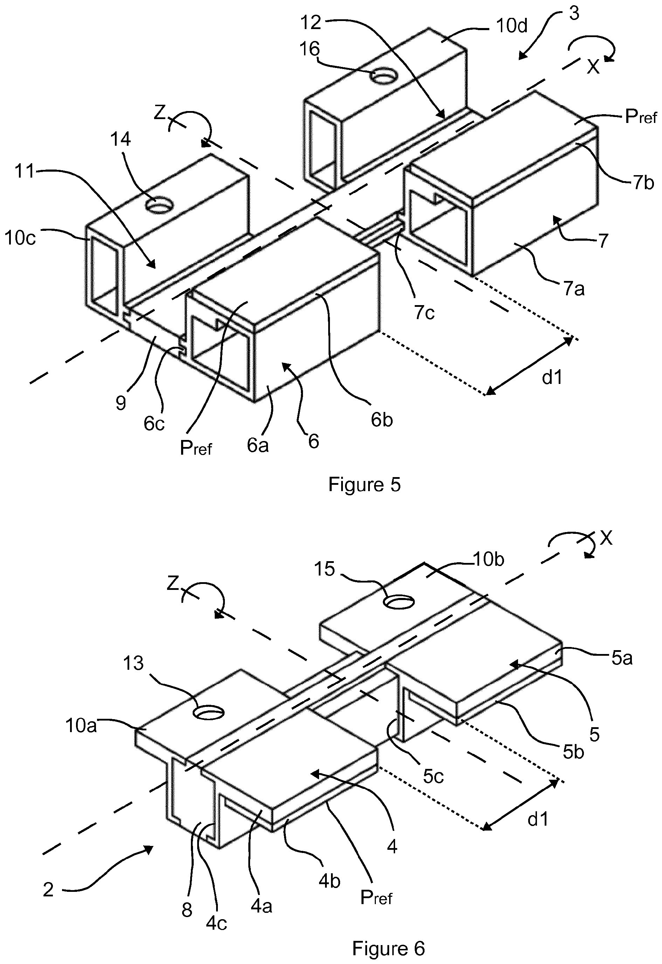

Selon une mise en oeuvre illustrée en figures 5 et 6 liée à la réalisation de la figure 2 mais qui s'applique aussi aux modes de réalisation des figures 3 et 4, pour chaque élément de liaison 8, 9, l'élément de liaison 8, 9 présente une direction d'allongement sensiblement parallèle à un axe X et lesdits premier et deuxième mors 4, 5, 6, 7 reliés par ledit élément de liaison 8, 9 sont décalés selon l'axe d'allongement et se situent d'un même côté de dudit élément de liaison 8, 9. En particulier, chacun des premiers et deuxièmes mors s'étend, notamment selon sa longueur, depuis une des extrémités longitudinales de l'élément de liaison auquel il est lié en direction de l'autre des extrémités longitudinales dudit élément de liaison auquel il est lié.

De préférence, comme illustré en figures 1 à 6, chacun des premiers et deuxièmes mors 4, 5, 6, 7 comporte une partie rigide 4a, 5a, 6a, 7a dont la fonction est de participer activement au serrage, et une partie souple 4b, 5b, 6b, 7b (non représentée en figure 4) dont la fonction est de protéger le module photovoltaïque de la partie rigide 4a, 5a, 6a, 7a correspondante, d'absorber une partie des efforts entre la partie rigide du mors correspondant et le module photovoltaïque, et de répartir les contraintes vues par le module photovoltaïque. Plus généralement, chaque partie souple d'un mors correspondant a pour fonction principale d'éviter le glissement du module photovoltaïque entre deux mors qui le serre. Chacune des parties rigides 4a, 5a, 6a, 7a peut être en métal, comme par exemple de l'aluminium, et peut comporter une face destinée au montage de la partie souple correspondante 4b, 5b, 6b, 7b. Par partie rigide, on entend que, dans la configuration de serrage, les efforts subis par les mors ne permettent pas de déformer ces parties rigides. En particulier, une partie rigide au sens de la présente description est telle qu'elle est indéformable tant que la charge qui lui est appliquée, à quelque endroit que ce soit, reste inférieure à 1GPa. Selon une autre formulation, pour une telle charge inférieure à 1GPa, on considère que la partie rigide est indéformable dans le sens où sa déformation relative est inférieure à 0,1%. Par partie souple, on entend que cette partie peut se déformer en fonction des contraintes vues par le module photovoltaïque, notamment le module d'élasticité du matériau de ces parties souples est compris entre 10MPa et 250MPa. En particulier, une face d'un mors peut comporter une rainure R1 par exemple en Té ou en queue d'aronde (visible en figure 4 où la partie souple n'est pas représentée) qui participe à l'assemblage de la partie souple correspondante qui comporte alors une saillie de forme complémentaire à la rainure et qui est insérée dans ladite rainure. Chacune des parties rigides 4a, 5a, 6a, 7a peut en outre comporter un organe d'assemblage du mors correspondant à l'élément de liaison de liaison correspondant. Par exemple, lorsqu'un mors est lié à un élément de liaison, on entend que le mors peut être monté à l'élément de liaison par collage ou encore par une partie de l'élément de liaison qui coopère avec une rainure par exemple en forme de Té ou de queue d'aronde formée dans ledit mors, ou alternativement que l'élément de liaison forme une continuité de matière avec un mors à son interface avec ledit mors. Les parties souples évoquées ci-dessus peuvent être en élastomère dont le module d'élasticité est compris entre 10MPa et 250MPa. La figure 3 illustre un exemple particulier où une couche d'élastomère forme les parties souples 4b, 5b et où une autre couche d'élastomère forme les parties souples 6b, 7b.

La longueur l1 (figures 1 à 4) de chaque mors est de préférence comprise entre 20mm et 100mm. La longueur des mors est donnée selon l'axe de serrage décrit ci-avant. On comprend alors que la longueur des mors est donnée selon une direction parallèle au bord du module photovoltaïque inséré entre les mors dans la configuration de serrage. La profondeur p1 (donnée de manière orthogonale à l'axe de serrage et de manière sensiblement parallèle au plan de référence d'appui P_{ref}) de chaque mors est de préférence comprise entre 10mm et 25mm. Concernant l'encombrement du dispositif de serrage, sa longueur totale l2 (figure 1) selon l'axe de serrage peut être comprise entre 45mm et 300mm, ou entre 45mm et 400mm, ou encore entre 30mm et 400mm, cette longueur l2 pouvant être égale à la somme des longueurs des mors d'un même organe plus l'écartement d1 entre ces mors. La valeur pour l'encombrement selon l2 peut être obtenue par l'homme du métier en adaptant par exemple la longueur des mors et la distance d1 en les prenant dans les gammes données à titre préférentiel dans la présente description ou dans d'autres gammes plus larges. L'encombrement d2 (figures 2, 3 et 4) du dispositif de serrage selon une direction orthogonale à l'axe de serrage et parallèle à un plan du module photovoltaïque pris dans le dispositif de serrage peut être compris entre 25mm et 70mm.

Plus particulièrement, le dispositif de serrage 1 est configuré de telle sorte que, dans la configuration de serrage :
- les premier et deuxième mors 4, 5 du premier organe 2 présentent la faculté de mouvement l'un par rapport à l'autre,
- les premier et deuxième mors 6, 7 dudit deuxième organe 3 présentent la faculté de mouvement l'un par rapport à l'autre.
Les facultés de mouvement évoquées ci-dessus permettent au dispositif de serrage de se déformer pour absorber des déformations du module photovoltaïque par exemple dus au vent ou à une charge reposant sur le module photovoltaïque.

De préférence comme illustré en figures 5 et 6 liées à la réalisation de la figure 2 mais de manière aussi applicable aux réalisations des figures 3 et 4, pour chaque élément de liaison 8, 9, ledit élément de liaison comporte une direction d'allongement sensiblement parallèle à l'axe X, les deux mors pouvant être liés audit élément de liaison de manière décalée selon cet axe X. Cet axe X peut être l'axe médian de l'élément de liaison correspondant. L'axe X est notamment sensiblement parallèle à l'axe de serrage A1 décrit ci-avant et l'allongement des mors liés audit élément de liaison se fait préférentiellement sensiblement parallèlement à l'axe X. Par ailleurs, les premier et deuxième mors 4, 5, 6, 7 reliés par ledit élément de liaison 8, 9 (et donc chacun lié audit élément de liaison correspondant) comportent chacun un plan de référence P_{ref} d'appui destiné à venir en contact avec le module photovoltaïque. Le premier mors 4, 6 lié audit élément de liaison 8, 9 comporte un degré de liberté en rotation autour d'un axe Z sensiblement parallèle au plan de référence d'appui du deuxième mors 7, 5 lié audit élément de liaison 8, 9. Cet axe Z est aussi sensiblement orthogonal audit axe X. De manière corollaire, le deuxième mors 5, 7 lié audit élément de liaison 8, 9 comporte un degré de liberté en rotation autour d'un axe Z sensiblement parallèle au plan de référence d'appui du premier mors 4, 6 lié audit élément de liaison 8, 9. Cet axe Z est aussi sensiblement orthogonal à l'axe X. Le degré de liberté des mors d'un même organe selon l'axe Z correspondant permet avantageusement au dispositif de serrage d'accompagner la déformation d'un module photovoltaïque qu'il serre lors d'une flexion du bord du module photovoltaïque situé entre les mors, limitant ainsi les contraintes au sein du module au niveau des espaces de serrage. L'axe Z est notamment un axe sensiblement orthogonal au bord du module photovoltaïque situé entre les premiers et deuxièmes mors 4, 5, 6, 7 lorsque ledit module est serré par le dispositif de serrage. En complément, pour chaque élément de liaison 8, 9, les premiers et deuxièmes mors 4, 5, 6, 7 comportent un degré de liberté en rotation autour de l'axe X correspondant. Le degré de liberté en rotation autour de l'axe X permet avantageusement au dispositif de maintien d'accompagner la déformation d'un module photovoltaïque qu'il serre lors d'une flexion de ce module de manière sensiblement orthogonale au bord du module photovoltaïque disposé entre les mors dans la configuration de serrage. L'axe X est donc sensiblement parallèle au bord du module photovoltaïque lorsque ce bord est situé entre les premiers et deuxièmes mors 4, 5, 6, 7. Bien entendu, tous les degrés de liberté cités ci-dessus sont limités par l'élément de liaison et ses caractéristiques de déformation comme par exemple le module d'élasticité du matériau qui le compose.

Un tel dispositif de serrage à éléments de liaison 8, 9 tels que décrits peut absorber au mieux les contraintes du module photovoltaïque qu'il doit serrer. Les pinces selon l'art antérieur permettent de serrer chacune un module photovoltaïque au niveau d'un seul espace de serrage ce qui induit des contraintes importantes dans le module photovoltaïque au niveau de ce seul espace de serrage qui peut aboutir à la casse du module photovoltaïque au niveau des bords de la pince. En proposant ici deux espaces de serrage distincts et adjacents en utilisant quatre mors pour un même dispositif de serrage, il est ici possible de diminuer les contraintes locales vues par le module photovoltaïque notamment en cas d'intempérie.

On a dit précédemment que les premier et deuxième organes 2, 3 étaient configurés pour serrer, en particulier localement, le module photovoltaïque. On entend par là que chaque premier mors 4, 6 est proche du deuxième mors 5, 7 auquel il est relié via l'élément de liaison 8, 9 correspondant. En ce sens, pour le premier organe 2 le premier mors 4 du premier organe 2 est séparé du deuxième mors 5 du premier organe 2 d'un écartement (ou d'une distance) d1 (figures 1 à 6) de préférence compris entre 5mm et 100mm, et plus particulièrement entre 20mm et 40mm. Par ailleurs, pour le deuxième organe 3, le premier mors 6 du deuxième organe 3 est séparé du deuxième mors 7 du deuxième organe 3 de l'écartement (ou de la distance) d1 compris entre 5mm et 100mm, et plus particulièrement entre 20mm et 40mm. Ici, un écartement représente une distance de séparation entre deux mors. Ces écartements permettent de former un espace entre mors d'une même mâchoire qui peut se réduire ou s'agrandir lorsque le dispositif de serrage est dans la configuration de serrage et que des efforts sont appliqués par le module photovoltaïque aux mors. On comprend de ce qui a été dit ci-dessus que le dispositif de serrage se comporte comme une unique pince munie de quatre doigts (formés par les mors) serrant deux à deux le module photovoltaïque dans la configuration de serrage.

Il résulte de tout ce qui a été dit ci-dessus que chaque élément de liaison 8, 9 peut présenter une longueur égale à la somme des longueurs des premier et deuxième mors 4, 5, 6, 7 liés à cet élément de liaison 8, 9 plus la valeur de l'écartement d1 entre ces premier et deuxième mors 4, 5, 6, 7. Les éléments de liaison 8, 9 peuvent présenter une largueur comprise entre 25mm et 70mm cette largeur est notamment donnée selon un axe orthogonal à l'axe de serrage et parallèle au plan du module photovoltaïque lorsque ce dernier est serré par le dispositif de serrage.

Selon un premier mode de réalisation illustré en figures 2, 4, 5 et 6, les éléments de liaison 8, 9 du premier organe 2 et du deuxième organe 3 sont en élastomère. Le module d'élasticité (ou module de Young) de l'élastomère est préférentiellement compris entre 10MPa et 500MPa, et notamment entre 30MPa et 100MPa. Un tel module d'élasticité permet d'obtenir la fonction de déformabilité souhaitée dans le cadre de l'application, et donc de permettre les degrés de liberté évoqués ci-dessus. De préférence, lorsque les éléments de liaison sont en élastomère, pour chaque élément de liaison les premier et deuxième mors liés à cet élément de liaison le sont par collage ou par assemblage. Par exemple, chacun des premiers et deuxièmes mors comporte une rainure de montage 4c, 5c, 6c, 7c (figure 5 et 6) dans laquelle est encastrée une partie correspondante de l'élément de liaison correspondant.

L'élastomère utilisé pour former les éléments de liaison 8, 9 est de préférence suffisamment résilient pour absorber au mieux des contraintes allant jusqu'à 200MPa (en fait, les parties rigides ne se déformant pas, les contraintes évoquée juste ci-dessus et subies par le module seront sensiblement les mêmes que celles subies par l'élastomère) mais présente aussi une reprise élastique adaptée. Par reprise élastique adaptée, on entend que la déformation au fluage de l'élément de liaison concerné, et mesurée conformément à la norme ISO10066 datée de mars 1998 est inférieure à 5%. Les deux caractéristiques (résilience et reprise élastique) sont souvent antinomiques, cependant les polymères dans la famille des caoutchoucs (élastomères) peuvent satisfaire à cette particularité. Plus particulièrement, chaque élément de liaison peut être en élastomère et l'élastomère peut être choisi parmi un copolymère éthylène-propylène, un terpolymère éthylène-propylène-diène (dont le sigle est EPDM pour « Ethylène Propylène Diène-Monomère », un polyuréthane thermoplastique (aussi connu sous le sigle « TPU » pour Thermoplastique PolyUréthane) et un silicone. Il peut aussi être utilisé un TPU ou un silicone non réticulé en alternative de l'élastomère. Concernant le copolymère et le terpolymère donnés ci-dessus, ces matériaux sont adaptés dans le sens où ils présentent une excellente résistance aux agents atmosphériques et une bonne tenue sur une large gamme de température (de -40°C à +150°C) ce qui leur permet d'être utilisés en extérieur pendant de longues périodes. Si un TPU est utilisé pour former les éléments de liaison, il peut s'agir d'un caoutchouc polyuréthane souple (par exemple de dureté 40 Shore A). Si un silicone est utilisé pour former les éléments de liaison, il peut s'agir d'un gel silicone de dureté 5 Shore A. Les duretés en Shore A sont préférentiellement données ici selon la norme ISO2039-2 :1987.

La formulation (charges, plastifiant, agent vulcanisant, noir de carbone...) de l'élastomère choisi peut permettre d'obtenir une grande variété de propriétés mécaniques. Dans le cadre de la présente application au serrage de modules photovoltaïques, il est considéré un domaine de formulation donnant des modules d'élasticité compris entre 10MPa et 500MPa. En dessous de 10MPa il y a un risque important de d'instabilité au vieillissement, et au dessus Ide 500MPa, les formulations ou la nature des matériaux devient trop complexes et particulières.

Alternativement aux figures 2 et 4, les éléments de liaison 8, 9 peuvent être chacun formé par une lame comportant du, ou en, métal comme illustré en figure 3. Le métal peut être de l'aluminium. Cet aluminium peut présenter un module d'élasticité de 57GPa et une résistance élastique supérieure à 300MPa, dans ce cas l'épaisseur de la lame sera choisie pour autoriser les mouvements décrits ci-avant lors de flexions du module photovoltaïque serré par les mors. Alternativement, l'aluminium peut être remplacé par un acier inoxydable de type 304 ou 316. La lame et la partie rigide des premier et deuxième mors liés à cette lame peuvent être faire partie d'une, ou constituer une, seule pièce monolithique notamment d'un même matériau comme l'aluminium. On comprend alors que l'épaisseur des lames est adaptée pour assurer les facultés de mouvement décrites ci-avant et notamment les rotations selon les axes X et Z. De manière plus générale, les élastomères évoqués ci-avant en tant qu'éléments de liaison peuvent être remplacés par des pièces métalliques de type ressort ou lame/rondelles élastiques. Dans une modalité, une réalisation peut consister à jouer sur les caractéristiques mécaniques du métal ou d'un alliage métallique utilisé pour former un élément de liaison correspondant et sur le facteur de forme de cet élément de liaison.

Comme évoqué précédemment, les mors sont destinés à serrer le module photovoltaïque. De manière générale, le dispositif de serrage du module photovoltaïque peut comporter un système de serrage 10 (figures 2 à 4) des mors (c'est à des premiers et deuxièmes mors). Un tel dispositif de serrage 10 est configuré pour provoquer le serrage du module photovoltaïque par les premiers mors et par les deuxièmes mors lorsque ledit système de serrage 10 est sollicité. De préférence, le système de serrage 10 relie les éléments de liaison 8, 9 d'où il résulte que la sollicitation du système de serrage tend à rapprocher les éléments de liaison 8, 9 et par voie de conséquence permet aux premiers et deuxièmes mors de serrer le module photovoltaïque dans la configuration de serrage.

Sur les figures 2, 3, 5 et 6 le rapprochement des mors en vue de réaliser le serrage du module photovoltaïque peut être mis en oeuvre par le système de serrage 10 qui, lorsqu'il est sollicité, provoque la sollicitation du premier mors 4 du premier organe 2 vers le premier mors 6 du deuxième organe 3 et du deuxième mors 5 du premier organe 2 vers le deuxième mors 7 du deuxième organe 3. Par ailleurs, dans la configuration de serrage, le système de serrage 10 permet aux premiers et deuxièmes mors d'exercer chacun une pression sur le module photovoltaïque. En particulier, l'élément de liaison 8 du premier organe 2 relie les premier et deuxième mors 4, 5 du premier organe 2 entre eux et est lié au système de serrage 10. Par ailleurs, l'élément de liaison 9 du deuxième organe 3 relie les premier et deuxième mors 6, 7 du deuxième organe 3 entre eux, et est lié au système de serrage 10. En ce sens, il en résulte que lorsque le système de serrage 10 est sollicité il peut entrainer le déplacement des mors via les éléments de liaison 8, 9. On entend ici que les mors ne sont pas en contact direct avec le système de serrage : un des éléments de liaison 8, 9 étant interposé entre chaque mors et le système de serrage 10. Lors d'un serrage d'un module photovoltaïque entre les premiers et deuxièmes mors, la pression exercée par les mors sur le module photovoltaïque dépend de la sollicitation du système de serrage qui transmet des efforts de sollicitation aux éléments de liaison 8, 9, puis chaque élément de liaison transmet à son tour des efforts d'actionnement aux premier et deuxième mors auxquels il est relié pour les plaquer contre le module photovoltaïque.

En outre, le système de serrage des mors peut aussi être utilisé pour monter le dispositif de serrage à un châssis de support comme on le verra par la suite.

Selon les réalisations des figures 2, 3, 5 et 6, le système de serrage comporte des première et deuxième parties 10a, 10b liées/raccordées à l'élément de liaison 8 du premier organe 2 de sorte que ledit élément de liaison 8 dudit premier organe 2 relie d'une part la première partie 10a au premier mors 4 du premier organe 2 et, d'autre part, la deuxième partie 10b au deuxième mors 5 du premier organe 2. Par ailleurs, le système de serrage 10 comporte des troisième et quatrième parties 10c, 10d liées/raccordées à l'élément de liaison 9 du deuxième organe 3 de sorte que ledit élément de liaison 9 dudit deuxième organe 3 relie d'une part la troisième partie 10c au premier mors 6 du deuxième organe 3 et, d'autre part, la quatrième partie 10d au deuxième mors 7 du deuxième organe 3. En particulier, l'élément de liaison 8 du premier organe est tel qu'il autorise, en fonction des efforts appliqués aux premier et deuxième mors 4, 5 du premier organe 2, un mouvement des premier et deuxième mors 4, 5 du premier organe 2 par rapport aux première et deuxième parties 10a, 10b du système de serrage lorsque ces premier et deuxième mors 4, 5 sont soumis à des efforts en provenance du module photovoltaïque serré par le dispositif de serrage. Par ailleurs, l'élément de liaison 9 du deuxième organe 3 est tel qu'il autorise un mouvement des premier et deuxième mors 6, 7 du deuxième organe 3 par rapport aux troisième et quatrième parties 10c, 10d du système de serrage 10 lorsque ces premier et deuxième mors 6, 7 sont soumis à des efforts en provenance du module photovoltaïque serré par le dispositif de serrage. En particulier, dans la configuration de serrage évoquée ci-dessus, la première partie reste fixe par rapport à la troisième partie et la deuxième partie reste fixe par rapport à la quatrième partie. De manière préférée, le système de serrage 10 comporte les première, deuxième, troisième et quatrième parties distinctes, et la première partie 10a comporte une face liée à l'élément de liaison 8 du premier organe 2 et orientée vers le premier mors 4 du premier organe 2 (notamment vers une face du premier mors 4 liée audit élément de liaison 8), et une face orientée vers la troisième partie 10c. La deuxième partie 10b comporte une face liée à l'élément de liaison 8 du premier organe 2 et orientée vers le deuxième mors 5 (notamment vers une face du deuxième mors 5 liée audit élément de liaison 8) du premier organe 2, et une face orientée vers la quatrième partie 10d. La troisième partie 10c comporte une face liée à l'élément de liaison 9 du deuxième organe 3 et orientée vers le premier mors 6 du deuxième organe 3 (notamment vers une face du premier mors 6 liée audit élément de liaison 9), et une face orientée vers la première partie 10a. La quatrième partie 10d comporte une face liée à l'élément de liaison 9 du deuxième organe 3 et orientée vers le deuxième mors 7 du deuxième organe 3 (notamment vers une face du deuxième mors 7 liée audit élément de liaison 9), et une face orientée vers la deuxième partie 10b. On comprend de ce qui a été dit ci-dessus que le serrage des premiers mors 4, 6 est dépendant de la position de la première partie 10a par rapport à la troisième partie 10c et que le serrage des deuxièmes mors 5, 7 est dépendant de la position de la deuxième partie 10b par rapport à la quatrième partie 10d. Notamment, comme illustré en figures 2, 3 et 5, une première rainure 11 est délimitée par la troisième partie 10c, une partie correspondante de l'élément de liaison 9 du deuxième organe 3 et le premier mors 6 du deuxième organe 3, et une deuxième rainure 12 est délimitée par la quatrième partie 10d, une partie correspondante de l'élément de liaison 9 du deuxième organe 3 et le deuxième mors 7 du deuxième organe 3. L'élément de liaison 8 du premier organe 2 s'étend en partie dans chacune de ces première et deuxième rainures 11, 12 qui permettent d'assurer son guidage au cours du serrage et de maintenir son positionnement par rapport à l'élément de liaison 9 du deuxième organe dans la configuration de serrage nonobstant un jeu fonctionnel. En particulier, ces rainures peuvent aussi recevoir des bras issu d'une partie et d'un mors qui servent à les fixer à l'élément de liaison 8.

De préférence (figures 2, 3, 5 et 6), les premier et deuxième mors 4, 5 du premier organe 2 peuvent être liés/assemblés à un premier côté de l'élément de liaison 8 du premier organe 2, et les première et deuxième parties 10a, 10b du système de serrage sont liées à un deuxième côté de l'élément de liaison 8 du premier organe 2 opposé audit premier côté de l'élément de liaison 8 du premier organe 2. De manière corollaire, les premier et deuxième mors 6, 7 du deuxième organe 3 sont liés à un premier côté de l'élément de liaison 9 du deuxième organe 3, et les troisième et quatrième parties 10c, 10d sont liées à un deuxième côté de l'élément de liaison 9 du deuxième organe 3 opposé audit premier côté de l'élément de liaison 9 du deuxième organe 3. Ceci permet aux mors d'avoir un plus grand débattement lorsqu'ils absorbent une déformation du module photovoltaïque qu'ils serrent puisque chaque mors peut présenter un degré de liberté selon les axes X et Z décrits ci-avant.

Sur les figures 2, 5 et 6, chacun des premiers et deuxièmes mors 4, 5, 6, 7 (notamment chacune des parties rigides de ces mors, notamment en métal comme par exemple en aluminium) est lié par fixation à un des éléments de liaison 8, 9 en élastomère correspondant, et chacune des première, deuxième, troisième et quatrième parties 10a, 10b, 10c 10d (notamment en métal comme l'aluminium) du système de serrage est fixée à un des éléments de liaison 8, 9 en élastomère correspondant.

Sur la figure 3, chacune des première, deuxième, troisième et quatrième parties 10a, 10b, 10c, 10d peut être en métal. Notamment, les première et deuxième parties 10a, 10b, l'élément de liaison 8 du premier organe 2 et les parties rigides 4a, 5a des premier et deuxième mors 4, 5 du premier organe 2 sont formés par une pièce monolithique en métal comme par exemple de l'aluminium. Par ailleurs, les troisième et quatrième parties 10c, 10d, l'élément de liaison 9 du deuxième organe 3 et les parties rigides 6a, 7a des premier et deuxième mors 6, 7 du deuxième organe 3 sont formés par une pièce monolithique en métal comme par exemple de l'aluminium. On comprend ici que la déformabilité de chacun des éléments de liaison peut être dépendante de sa forme et du matériau utilisé.

Sur les figures 2, 3 et 6, la première partie 10a comporte une ouverture traversante 13 coaxiale d'une ouverture traversante 14 (figure 5) de la troisième partie 10c, et la deuxième partie 10b comporte une ouverture traversante 15 coaxiale d'une ouverture traversante 16 (figure 5) de la quatrième partie 10d. Ceci permet à des tiges 17 (représentées en pointillés aux figures 2 et 3), par exemple munies chacune d'un ou plusieurs filets de vissage, du système de serrage 10 et en combinaison avec l'utilisation d'écrous 20 de solliciter les première et troisième parties 10a, 10c du système de serrage l'une en direction de l'autre et les deuxième et quatrième parties 10b, 10d du système de serrage l'une en direction de l'autre. Chaque tige 17 peut coopérer avec deux écrous 20 représentés en pointillés permettant de solliciter le système de serrage pour solliciter les mors dans la configuration de serrage du dispositif de serrage afin que ces mors exercent une pression sur le module photovoltaïque.

Selon le mode de réalisation illustré en figure 4, le premier organe 2 est tel que le premier mors 4 et le deuxième mors 5 comportent chacun un manchon 18, 19 dans lequel est insérée une partie de l'élément de liaison 8 du premier organe 2. On comprend que le manchon 18 reçoit une première partie de l'élément de liaison 8 et que le manchon 19 reçoit une deuxième partie de l'élément de liaison 8. Par ailleurs, le deuxième organe 3 est tel que ses premier et deuxième mors 6, 7 sont fixés sur une même face d'une plaque, notamment en élastomère, formant l'élément de liaison 9 du deuxième organe 3. Selon cette réalisation, le deuxième organe 3 est tel qu'il comporte une première rainure 11 de guidage, en particulier formée dans le premier mors 6 du deuxième organe 3, recevant le manchon 18 du premier mors 4 du premier organe 2 et une deuxième rainure 12 de guidage, en particulier formée dans le deuxième mors 7 du deuxième organe 3, recevant le manchon 19 du deuxième mors 5 du premier organe 2. Bien entendu chacune des première et deuxième rainures est dimensionnée pour permettre un jeu fonctionnel du manchon qu'elle reçoit. Le serrage des premiers et deuxièmes mors peut être réalisé un utilisant deux tiges 17 (représentées en pointillés), l'une des tiges traversant l'élément de liaison 9 du deuxième organe 3, le premier mors 6 du deuxième organe 3 au niveau de sa rainure 11 (notamment la tige passe par le fond de la rainure 11), le premier mors 4 du premier organe 2 au niveau de son manchon 18 (notamment la tige traverse le manchon 18) et la partie de l'élément de liaison 8 du premier organe 2 placée dans le manchon 18, et l'autre des tiges traversant l'élément de liaison 9 du deuxième organe 3, le deuxième mors 7 du deuxième organe 3 au niveau de sa rainure 12 (notamment la tige passe par le fond de la rainure 12), le deuxième mors 5 du premier organe 2 au niveau de son manchon 19 (notamment la tige traverse le manchon 19) et la partie de l'élément de liaison 8 du premier organe 2 placée dans le manchon 19. Ces tiges peuvent ensuite coopérer avec des écrous 20 représentés en pointillés : chaque tige peut alors comporter un ou deux filets (deux écrous par tige permettant de solliciter le système de serrage pour solliciter les mors dans la configuration de serrage du dispositif de serrage afin que ces mors exercent une pression sur le module photovoltaïque). On comprend ici que le système de serrage 10 peut comporter des ouvertures pratiquées dans le premier organe et le deuxième organe et traversées par les tiges 17 qui appartiennent alors aussi au système de serrage.

Il est à présent décrit un protocole de test comparatif entre une pince selon l'art antérieur équipée de simplement deux mors présentant une longueur de 80mm chacun muni d'une partie rigide et d'un élastomère en contact avec le module photovoltaïque et entre un dispositif de serrage selon l'invention et plus particulièrement selon le mode de réalisation de la figure 2 ayant des mors de 40mm de long écartés de 30mm et dont les éléments de liaison ainsi que les parties souples des mors sont formés en élastomère. Conformément aux exigences de la norme évoquée précédemment, une pression de 2400Pa a été appliquée de manière uniforme sur toute la surface de la face avant du module photovoltaïque. La figure 7 illustre les valeurs de contraintes normales par rapport à la surface du module vues/subies par le module photovoltaïque en MPa (mégapascal) là où il est serré en fonction du module d'élasticité, donné en MPa d'un élastomère utilisé simplement en tant que partie souple des mors pour le cas de l'art antérieur, et en tant qu'éléments de liaison et de parties souples des mors selon la présente invention. Les points associés aux courbes C1 et C2 correspondent aux contraintes vues par le module photovoltaïque selon la pince de l'art antérieur et mesurées respectivement parallèlement à l'axe du bord du module photovoltaïque (C1) placé entre les mors (cet axe étant alors orientée de manière similaire à l'axe X de la présente invention), et parallèlement à un axe orthogonal au bord du module photovoltaïque (C2) placé entre les mors (cet axe étant alors orienté de manière similaire à l'axe Z de la présente invention). Les points associés aux courbes référencées C3 et C4 correspondent aux contraintes vues par le module photovoltaïque serré par le dispositif de serrage selon la présente invention et mesurées respectivement parallèlement à l'axe du bord du module (sensiblement parallèle à l'axe X décrit ci-avant pour C3) et parallèlement à un axe orthogonal au bord du module (sensiblement parallèle l'axe Z décrit ci-avant pour C4). Il est possible de conclure en analysant ce graphique que le dispositif selon l'invention permet de limiter les contraintes maximales vues par le module photovoltaïque, ceci diminuant le risque de casse. En effet, le module photovoltaïque est notamment tel que sa face avant est une plaque de verre d'environ 3mm d'épaisseur dont la ligne C5 représente la ligne de rupture. Une telle plaque de verre peut casser lorsqu'elle subit des contraintes supérieures à 118MPa : on comprend donc qu'il est préférable d'utiliser un dispositif de serrage permettant de limiter les contraintes maximales vues par le module photovoltaïque.

L'analyse de la figure 7 permet de montrer que dans le cadre d'une pince selon l'art antérieur, les contraintes maximales sont vues par le module photovoltaïque selon l'axe parallèle au bord du module photovoltaïque. Ces contraintes évoluent en fonction du logarithme népérien du module d'élasticité de l'élastomère des mors. Cette fonction traduit l'influence forte de l'élastomère des mors lorsqu'il est plutôt mou (pour un module d'élasticité inférieur à 30MPa). Cependant, même dans le cas le plus favorable (module d'élasticité de l'élastomère des mors égal à 10MPa), la contrainte maximum subie par le module photovoltaïque reste supérieure à 110 MPa. Le calcul met aussi en évidence un écart très important entre les contraintes suivant l'axe parallèle au bord du module et celles suivant l'axe orthogonal au bord du module, ceci étant lié à la rigidité de la pince. Dans le cas de la réalisation selon un mode particulier de l'invention, les élastomères utilisés en tant que partie souple des mors et qu'élément de liaison permettent une meilleure répartition des contraintes selon les axes X et Z (avec selon les cas moins de 4% d'écart entre elles, en comparaison des 86% d'écart dans le cas de la pince classique). Les déplacements (flêches du module photovoltaïque) peuvent être légèrement plus importants dans le cadre de la présente invention, à savoir de 30mm à 50 mm, suivant l'écartement entre les deux mors d'un même organe. Ces déplacements sont acceptables dans l'application visée de maintien d'un module photovoltaïque.

En s'intéressant aux résultats pour des élastomères avec des modules d'élasticité compris entre 30MPa et 100MPa, la contrainte maximale subie par le module photovoltaïque serré par le dispositif de serrage est inférieure de 22% par rapport à celle dans le même module photovoltaïque maintenu par la pince selon l'art antérieur. Dans l'exemple traité, elle est inférieure à 95 MPa ce qui est tout à fait acceptable pour des modules photovoltaïques à structure légère. En conclusion, tout ceci confirme l'intérêt du dispositif de serrage car non seulement la contrainte maximale subie par le panneau est atténuée de l'ordre de 22%, mais elle permet aussi l'utilisation au niveau des mors d'un élastomère plus rigide et donc plus robuste. En effet, plus le module de Young est faible meilleure sera la reprise élastique de l'élastomère, mais plus l'élastomère vieillira mal dans le sens où son module de Young va augmenter avec le temps. Avec la présente invention on peut se permettre de choisir un élastomère à module de Young élevé et respectant la norme pour les tests de charge évoquée ci-avant pour augmenter la durée de vie de cet élastomère.

Il a été décrit ci-avant un dispositif de serrage pour un module photovoltaïque. Selon une réalisation, un même dispositif de serrage peut être utilisé pour serrer deux modules photovoltaïques adjacents. Pour cela, le dispositif de serrage peut être agencé entre les deux modules photovoltaïques et :
- le premier organe peut comporter un élément de liaison additionnel reliant des mors additionnels du premier organe entre eux, dans ce cas une partie du système de serrage peut appartenir au premier organe et peut relier l'élément de liaison du premier organe à l'élément de liaison additionnel du premier organe,
- le deuxième organe peut comporter un élément de liaison additionnel liant des mors additionnels du deuxième organe entre eux et agencés pour coopérer avec les mors additionnels du premier organe pour serrer un autre module photovoltaïque, dans ce cas une autre partie du système de serrage peut appartenir au deuxième organe et peut relier l'élément de liaison du deuxième organe à l'élément de liaison additionnel du deuxième organe.
Préférentiellement on dit que le dispositif de serrage présente une symétrie orthogonale par rapport à un plan passant par le système de serrage et orthogonal à des plans de serrage des deux modules photovoltaïques.

L'invention est aussi relative à une installation photovoltaïque comportant au moins un module photovoltaïque et notamment plusieurs modules photovoltaïques. Cette installation comporte au moins un dispositif de serrage 1 tel que décrit monté, d'une part, à un châssis, et, d'autre part audit au moins un module photovoltaïque de telle sorte que les premiers et deuxièmes mors dudit dispositif de serrage serrent ledit au moins un module photovoltaïque.

La figure 8 illustre justement une vue en coupe d'une installation 1000 au niveau d'un dispositif de serrage 1. L'installation comprend le châssis 1001 sur lequel est monté le dispositif de serrage du type de la figure 2 notamment via le système de serrage 10. Des tiges 17, notamment filetées, chacune équipée de deux écrous 20a, 20b permettent d'une part de serrer les mors 4, 6 en agissant sur les parties 10a, 10c du système de serrage 10 pour par exemple serrer le module photovoltaïque 100 entre les mors, et d'autre part de fixer le dispositif de serrage au châssis 1001. Le châssis 1001 forme notamment un support configuré pour orienter ledit au moins un module photovoltaïque 100 en direction d'un rayonnement solaire. Plusieurs dispositifs de serrage peuvent être utilisés pour maintenir un même module photovoltaïque au châssis. En particulier, quatre ou six dispositifs de serrage sont utilisés pour monter le module photovoltaïque au châssis.

En particulier, l'installation est telle que tout ce qui a été dit dans la présente description concernant le dispositif de serrage s'applique à l'installation. En particulier, alors que ledit au moins un module photovoltaïque est serré :
- le premier organe 2 est configuré de sorte que les premier et deuxième mors 4, 5 dudit premier organe 2 présentent une faculté de mouvement l'un par rapport à l'autre, ledit mouvement étant provoqué par une déformation dudit au moins un module photovoltaïque,
- le deuxième organe 3 est configuré de sorte que les premier et deuxième mors 6, 7 dudit deuxième organe 3 présentent une faculté de mouvement l'un par rapport à l'autre, ledit mouvement étant provoqué par une déformation dudit au moins un module photovoltaïque.

Le dispositif de serrage tel que décrit est tout particulièrement adapté pour participer au maintien d'un module photovoltaïque « léger » c'est à dire de poids par unité de surface compris entre 2Kg/m² et 5Kg/m² et ne comprenant pas de cadre de protection en aluminium. Un tel module photovoltaïque sera plus susceptible de se déformer en fonction de l'environnement auquel il est soumis qu'un module photovoltaïque « classique » c'est-à-dire de poids par unité de surface compris entre 8Kg/m² à 13Kg/m².

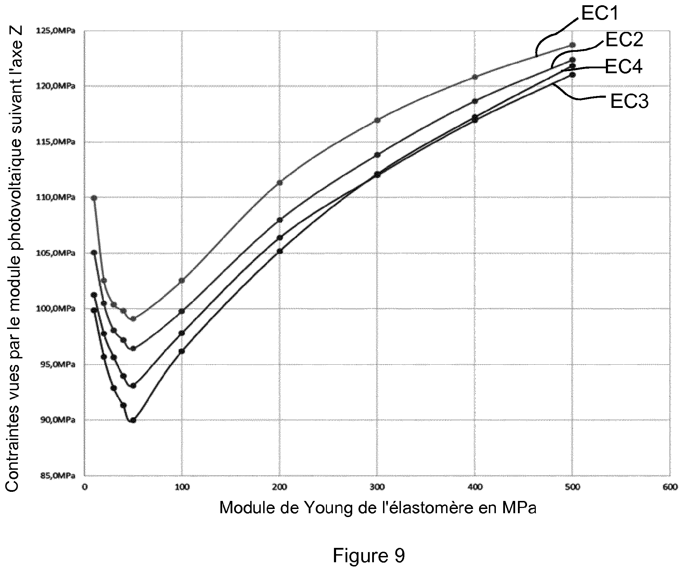

Il a été évoqué ci-avant un écartement particulier des mors entre eux pour un même organe. La figure 9 illustre les contraintes en MPa vues par le module photovoltaïque serré par le dispositif de serrage selon l'invention suivant l'axe Z décrit ci-avant (donc selon un axe orthogonal au bord du module photovoltaïque au niveau du dispositif de serrage) en fonction du module de Young de l'élastomère en MPa utilisé en tant qu'élastomère pour les éléments de liaison 8, 9 et les parties souples des mors 4, 5, 6, 7. La courbe EC1 correspond à un écartement de 5mm entre les mors d'un même organe, la courbe EC2 correspond à un écartement de 10mm entre les mors d'un même organe, la courbe EC3 correspond à un écartement de 20mm entre les mors d'un même organe, la courbe EC4 correspond à un écartement de 30mm entre les mors d'un même organe. On déduit de cette courbe que l'élastomère produit un effet intéressant sur la répartition des contraintes au sein du module photovoltaïque lorsque l'écartement est supérieur à 5mm et de préférence comprise entre 20mm et 40mm. Par ailleurs, l'écartement est préférentiellement inférieur à 100mm pour limiter l'encombrement du dispositif de serrage.

Selon une mise en oeuvre particulière, correspondant aux figures 2, 5, 6 et 8, chacun des premiers et deuxièmes mors comporte une partie rigide formée par un profilé métallique. Pour les premier et deuxième mors 6, 7 du deuxième organe 3, le profilé est un corps creux et comporte une face munie d'une rainure de montage de l'élément de liaison 9 du deuxième organe 3 et une face de montage de la partie souple du mors. Les troisième et quatrième parties 10c, 10d du système de serrage sont aussi des profilés métalliques, notamment creux, et comprennent chacune une face munie d'une rainure de montage de l'élément de liaison 9 orientée en direction de la face comportant la rainure de montage de l'un des premier et deuxième mors 6, 7 correspondant. En outre, chacun des premier et deuxième mors 4,5 du premier organe 2 peut être tel que sa partie rigide 4a, 5a est un profilé métallique comprenant une face d'assemblage dudit profilé métallique à l'élément de liaison 8 du premier organe, cette face d'assemblage peut, par exemple, comporter une rainure de montage, par exemple d'encastrement d'une saillie correspondante, dudit élément de liaison 8. Les parties rigides des premier et deuxième mors 4, 5 du premier organe 2 peuvent comporter une face de montage de la partie souple 4b, 5b correspondante du mors. Les première et deuxième parties 10a, 10b du système de serrage 10 sont aussi des profilés métalliques, notamment creux, et comprennent chacune une face d'assemblage dudit profilé à l'élément de liaison 8, cette face d'assemblage peut par exemple comporter une rainure de montage, par exemple d'encastrement d'une saillie correspondante, dudit élément de liaison 8.

Selon la mise en oeuvre particulière de la figure 3, le dispositif de serrage comporte un premier profilé métallique formé d'un seul tenant comportant les parties rigides des premier et deuxième mors 4, 5 du premier organe 2, l'élément de liaison 8 du premier organe 2 et les première et deuxième parties 10a, 10b du système de serrage 10. Le premier profilé comporte une entaille séparant les premier et deuxième mors 4, 5 et les première et deuxième parties du système de serrage. Par ailleurs, le dispositif comporte aussi un deuxième profilé métallique formé d'un seul tenant comportant les parties rigides des premier et deuxième mors 6, 7, notamment creuses, du deuxième organe 3, l'élément de liaison 9 du deuxième organe 3, et les deuxième et troisième parties 10c, 10d du système de serrage 10, notamment creuses. Le deuxième profilé comporte une entaille séparant les premier et deuxième mors 6, 7 et les troisième et quatrième parties 10c, 10d du système de serrage. Le premier mors 6 du deuxième organe 3 et la troisième partie 10c du système de serrage délimitent avec une portion de l'élément de liaison 9 du deuxième organe une rainure 11 dans laquelle se situe une partie correspondante de l'élément de liaison 8 du premier organe. Le deuxième mors 7 du deuxième organe 3 et la quatrième partie 10d du système de serrage 10 délimitent avec une portion de l'élément de liaison 9 du deuxième organe une rainure 12 dans laquelle se situe une partie correspondante de l'élément de liaison 8 du premier organe.

Dans la présente description, il a été évoqué des pièces (parties du système de serrage ou des mors, etc.) comportant du métal ou formées en métal, ces pièces peuvent être extrudées et le métal est préférentiellement de l'aluminium dont le module d'élasticité est de 57GPa (gigapascal) et dont la résistance élastique est supérieure à 300MPa. Dans la présente description, tout ce qui est en métal peut être replacé par un autre matériau si ce matériau permet la fonction recherchée.

## Revendications

1. Dispositif de serrage (1) pour module photovoltaïque (100) comportant un premier organe (2) et un deuxième organe (3) destinés à venir serrer le module photovoltaïque, **caractérisé en ce que** le premier organe (2) comporte un premier mors (4) et un deuxième mors (5), le deuxième organe (3) comporte un premier mors (6) et un deuxième mors (7), les premiers mors (4, 6) des premier et deuxième organes (2, 3) étant agencés pour serrer entre eux ledit module photovoltaïque (100) et les deuxièmes mors (5, 7) des premier et deuxième organes (2, 3) étant agencés pour serrer entre eux ledit module photovoltaïque (100),
et **en ce que** :
- le premier organe (2) est configuré de sorte que les premier et deuxième mors (4, 5) dudit premier organe (2) présentent une faculté de mouvement l'un par rapport à l'autre,
- le deuxième organe (3) est configuré de sorte que les premier et deuxième mors (6, 7) dudit deuxième organe (3) présentent une faculté de mouvement l'un par rapport à l'autre.

2. Dispositif selon la revendication 1, **caractérisé en ce que** les premier et deuxième mors (4, 5) du premier organe (2) sont reliés par un élément de liaison (8) déformable dudit premier organe (2), et **en ce que** les premier et deuxième mors dudit deuxième organe (3) sont reliés par un élément de liaison (9) déformable dudit deuxième organe (3).

3. Dispositif selon la revendication précédente, **caractérisé en ce que** pour chaque élément de liaison (8, 9) :
- ledit élément de liaison (8, 9) comporte une direction d'allongement sensiblement parallèle à un axe X,
- les premier et deuxième mors (4, 5, 6, 7) reliés par ledit élément de liaison (8, 9) comportent chacun un plan de référence d'appui destiné à venir en contact avec le module photovoltaïque,
- le premier mors (4, 6) lié audit élément de liaison (8, 9) comporte un degré de liberté en rotation autour d'un axe Z sensiblement parallèle au plan de référence d'appui du deuxième mors (5, 7) lié audit élément de liaison (8, 9), ledit axe Z étant sensiblement orthogonal audit axe X.

4. Dispositif selon la revendication précédente, **caractérisé en ce que**, pour chaque élément de liaison (8, 9), les premiers et deuxièmes mors (4, 5, 6, 7) comportent un degré de liberté en rotation autour de l'axe X correspondant.

5. Dispositif selon l'une quelconque des revendications 2 à 4, **caractérisé en ce que** les éléments de liaison (8, 9) du premier organe (2) et du deuxième organe (3) sont en élastomère.

6. Dispositif selon la revendication précédente, **caractérisé en ce que** le module d'élasticité dudit élastomère est compris entre 10MPa et 500MPa, et notamment entre 30MPa et 100MPa.

7. Dispositif selon l'une quelconque des revendications 2 à 4, **caractérisé en ce que** les éléments de liaison (10, 13) sont formés chacun par une lame comportant du métal.

8. Dispositif selon l'une quelconque des revendications précédentes, **caractérisé en ce que** pour chacun des premier et deuxième organes (2, 3), le premier mors est séparé du deuxième mors d'un écartement (d1) compris entre 5mm et 100mm, et plus particulièrement entre 20mm et 40mm.

9. Dispositif selon l'une quelconque des revendications précédentes, **caractérisé en ce qu'**il comporte un système de serrage (10) des mors configuré pour provoquer le serrage du module photovoltaïque par les premiers et deuxièmes mors (4, 5, 6, 7) lorsque ledit système de serrage (10) est sollicité.

10. Dispositif selon la revendication précédente, **caractérisé en ce que** le système de serrage (10) comporte des première, deuxième, troisième et quatrième parties (10a, 10b, 10c, 10d) distinctes, et **en ce que** :
- la première partie (10a) comporte une face liée à l'élément de liaison (8) du premier organe (2) et orientée vers le premier mors (4) du premier organe (2), et une face orientée vers la troisième partie (10c),
- la deuxième partie (10b) comporte une face liée à l'élément de liaison (8) du premier organe (2) et orientée vers le deuxième mors (5) du premier organe (2), et une face orientée vers la quatrième partie (10d),
- la troisième partie (10c) comporte une face liée à l'élément de liaison (9) du deuxième organe (3) et orientée vers le premier mors (6) du deuxième organe (3), et une face orientée vers la première partie (10a),
- la quatrième partie (10d) comporte une face liée à l'élément de liaison (9) du deuxième organe (3) et orientée vers le deuxième mors (7) du deuxième organe (3), et une face orientée vers la deuxième partie (10b),

11. Dispositif selon la revendication précédente, **caractérisé en ce que** :
- les premier et deuxième mors (4, 5) du premier organe (2) sont liés à un premier côté de l'élément de liaison (8) du premier organe (2), et les première et deuxième parties (10a, 10b) sont liées à un deuxième côté de l'élément de liaison (8) du premier organe (2) opposé audit premier côté de l'élément de liaison (8) du premier organe (2),
- les premier et deuxième mors (6, 7) du deuxième organe (3) sont liés à un premier côté de l'élément de liaison (9) du deuxième organe (3), et les troisième et quatrième parties (10c, 10d) sont liées à un deuxième côté de l'élément de liaison (9) du deuxième organe (3) opposé audit premier côté de l'élément de liaison (9) du deuxième organe (3).

12. Dispositif selon l'une quelconque des revendications 10 à 11, **caractérisé en ce que** la première partie (10a) comporte une ouverture traversante (13) coaxiale d'une ouverture traversante (14) de la troisième partie (10c), et **en ce que** la deuxième partie (10b) comporte une ouverture traversante (15) coaxiale d'une ouverture traversante (16) de la quatrième partie (10d).

13. Dispositif selon l'une quelconque des revendications 1 à 9, **caractérisé en ce que** le premier mors (4) et le deuxième mors (5) du premier organe (2) comportent chacun un manchon (18, 19) dans lequel est insérée une partie de l'élément de liaison (8) du premier organe (2), et **en ce que** les premier et deuxième mors (6, 7) du deuxième organe (3) sont fixés sur une même face d'une plaque, notamment en élastomère, formant l'élément de liaison (9) du deuxième organe (3), le deuxième organe (3) comportant une première rainure (11) de guidage recevant le manchon (18) du premier mors (4) du premier organe (2) et une deuxième rainure (12) de guidage recevant le manchon (19) du deuxième mors (5) du premier organe (2).

14. Installation photovoltaïque comportant au moins un module photovoltaïque, **caractérisée en ce qu'**elle comporte au moins un dispositif de serrage (1) selon l'une quelconque des revendications précédentes monté d'une part à un châssis (1001), et, d'autre part audit au moins un module photovoltaïque (100) de telle sorte que les premiers et deuxièmes mors dudit dispositif de serrage serrent ledit au moins un module photovoltaïque (100).

## Patentansprüche

1. Klemmvorrichtung (1) für ein Fotovoltaikmodul (100), aufweisend ein erstes Organ (2) und ein zweites Organ (3), die dazu bestimmt sind, das Fotovoltaikmodul zu klemmen, **dadurch gekennzeichnet, dass** das erste Organ (2) eine erste Klemmbacke (4) und eine zweite Klemmbacke (5) aufweist, das zweite Organ (3) eine erste Klemmbacke (6) und eine zweite Klemmbacke (7) aufweist, wobei die ersten Klemmbacken (4, 6) des ersten und des zweiten Organs (2, 3) angeordnet sind, das Fotovoltaikmodul (100) zwischen ihnen zu klemmen, und die zweiten Klemmbacken (5, 7) des ersten und des zweiten Organs (2, 3) angeordnet sind, das Fotovoltaikmodul (100) zwischen ihnen zu klemmen,
und dadurch, dass:
- das erste Organ (2) so ausgelegt ist, dass die erste und die zweite Klemmbacke (4, 5) des ersten Organs (2) bezogen aufeinander beweglich sind,
- das zweite Organ (3) so ausgelegt ist, dass die erste und die zweite Klemmbacke (6, 7) des zweiten Organs (3) bezogen aufeinander beweglich sind.

2. Vorrichtung nach Anspruch 1, **dadurch gekennzeichnet, dass** die erste und die zweite Klemmbacke (4, 5) des ersten Organs (2) durch ein verformbares Verbindungselement (8) des ersten Organs (2) verbunden sind, und dadurch, dass die erste und die zweite Klemmbacke des zweiten Organs (3) durch ein verformbares Verbindungselement (9) des zweiten Organs (3) verbunden sind.

3. Vorrichtung nach dem vorhergehenden Anspruch, **dadurch gekennzeichnet, dass** für jedes Verbindungselement (8, 9):
- das Verbindungselement (8, 9) eine Erstreckungsrichtung aufweist, die im Wesentlichen parallel zu einer X-Achse verläuft,
- die erste und die zweite Klemmbacke (4, 5, 6, 7), die durch das Verbindungselement (8, 9) verbunden sind, jeweils eine Bezugsstützfläche aufweisen, die dazu bestimmt ist, mit dem Fotovoltaikmodul in Kontakt zu kommen,
- die erste Klemmbacke (4, 6), die mit dem Verbindungselement (8, 9) verbunden ist, einen Drehfreiheitsgrad um eine Z-Achse aufweist, die im Wesentlichen parallel zur Bezugsstützfläche der zweiten Klemmbacke (5, 7) verläuft, die mit dem Verbindungselement (8, 9) verbunden ist, wobei die Z-Achse im Wesentlichen orthogonal zur X-Achse verläuft.

4. Vorrichtung nach dem vorhergehenden Anspruch, **dadurch gekennzeichnet, dass** für jedes Verbindungselement (8, 9) die ersten und die zweiten Klemmbacken (4, 5, 6, 7) einen Drehfreiheitsgrad um die entsprechende X-Achse aufweisen.

5. Vorrichtung nach einem der Ansprüche 2 bis 4, **dadurch gekennzeichnet, dass** die Verbindungselemente (8, 9) des ersten Organs (2) und des zweiten Organs (3) aus Elastomer sind.

6. Vorrichtung nach dem vorhergehenden Anspruch, **dadurch gekennzeichnet, dass** der Elastizitätsmodul des Elastomers zwischen 10 MPa und 500 MPa liegt, und insbesondere zwischen 30 MPa und 100 MPa.

7. Vorrichtung nach einem der Ansprüche 2 bis 4, **dadurch gekennzeichnet, dass** die Verbindungselemente (10, 13) jeweils von einem Streifen gebildet sind, der Metall aufweist.

8. Vorrichtung nach einem der vorhergehenden Ansprüche, **dadurch gekennzeichnet, dass** für jedes des ersten und des zweiten Organs (2, 3) die erste Klemmbacke von der zweiten Klemmbacke um einen Abstand (d1) getrennt ist, der zwischen 5 mm und 100 mm, und insbesondere zwischen 20 mm und 40 mm liegt.

9. Vorrichtung nach einem der vorhergehenden Ansprüche, **dadurch gekennzeichnet, dass** sie ein Klemmsystem (10) der Klemmbacken aufweist, das ausgelegt ist, das Klemmen des Fotovoltaikmoduls durch die ersten und zweiten Klemmbacken (4, 5, 6, 7) zu bewirken, wenn das Klemmsystem (10) beansprucht wird.

10. Vorrichtung nach dem vorhergehenden Anspruch, **dadurch gekennzeichnet, dass** das Klemmsystem (10) einen separaten ersten, zweiten, dritten und vierten Abschnitt (10a, 10b, 10c, 10d) aufweist, und dadurch, dass:
- der erste Abschnitt (10a) eine Fläche, die mit dem Verbindungselement (8) des ersten Organs (2) verbunden ist und in Richtung der ersten Klemmbacke (4) des ersten Organs (2) gerichtet ist, und eine Fläche, die in Richtung des dritten Abschnitts (10c) gerichtet ist, aufweist,
- der zweite Abschnitt (10b) eine Fläche, die mit dem Verbindungselement (8) des ersten Organs (2) verbunden ist und in Richtung der zweiten Klemmbacke (5) des ersten Organs (2) gerichtet ist, und eine Fläche, die in Richtung des vierten Abschnitts (10d) gerichtet ist, aufweist,
- der dritte Abschnitt (10c) eine Fläche, die mit dem Verbindungselement (9) des zweiten Organs (3) verbunden ist und in Richtung der ersten Klemmbacke (6) des zweiten Organs (3) gerichtet ist, und eine Fläche, die in Richtung des ersten Abschnitts (10a) gerichtet ist, aufweist,
- der vierte Abschnitt (10d) eine Fläche, die mit dem Verbindungselement (9) des zweiten Organs (3) verbunden ist und in Richtung der zweiten Klemmbacke (7) des zweiten Organs (3) gerichtet ist, und eine Fläche, die in Richtung des zweiten Abschnitts (10b) gerichtet ist, aufweist,

11. Vorrichtung nach dem vorhergehenden Anspruch, **dadurch gekennzeichnet, dass**:
- die erste und die zweite Klemmbacke (4, 5) des ersten Organs (2) mit einer ersten Seite des Verbindungselements (8) des ersten Organs (2) verbunden sind und der erste und der zweite Abschnitt (10a, 10b) mit einer zweiten Seite des Verbindungselements (8) des ersten Organs (2) verbunden sind, die der ersten Seite des Verbindungselements (8) des ersten Organs (2) gegenüberliegt,
- die erste und die zweite Klemmbacke (6, 7) des zweiten Organs (3) mit einer ersten Seite des Verbindungselements (9) des zweiten Organs (3) verbunden sind und der dritte und der vierte Abschnitt (10c, 10d) mit einer zweiten Seite des Verbindungselements (9) des zweiten Organs (3) verbunden sind, die der ersten Seite des Verbindungselements (9) des zweiten Organs (3) gegenüberliegt.

12. Vorrichtung nach einem der Ansprüche 10 bis 11, **dadurch gekennzeichnet, dass** der erste Abschnitt (10a) eine Durchgangsöffnung (13) aufweist, die zu einer Durchgangsöffnung (14) des dritten Abschnitts (10c) koaxial ist, und dadurch, dass der zweite Abschnitt (10b) eine Durchgangsöffnung (15) aufweist, die zu einer Durchgangsöffnung (16) des vierten Abschnitts (10d) koaxial ist.

13. Vorrichtung nach einem der Ansprüche 1 bis 9, **dadurch gekennzeichnet, dass** die erste Klemmbacke (4) und die zweite Klemmbacke (5) des ersten Organs (2) jeweils eine Hülse (18, 19) aufweisen, in welche ein Abschnitt des Verbindungselements (8) des ersten Organs (2) eingeführt ist, und dadurch, dass die erste und die zweite Klemmbacke (6, 7) des zweiten Organs (3) auf einer selben Fläche einer Platte befestigt sind, die insbesondere aus Elastomer ist, die das Verbindungselement (9) des zweiten Organs (3) bildet, das zweite Organ (3) aufweisend eine erste Führungsnut (11), welche die Hülse (18) der ersten Klemmbacke (4) des ersten Organs (2) aufnimmt, und eine zweite Führungsnut (12), welche die Hülse (19) der zweiten Klemmbacke (5) des ersten Organs (2) aufnimmt.

14. Fotovoltaikanlage, aufweisend mindestens ein Fotovoltaikmodul, **dadurch gekennzeichnet, dass** sie mindestens eine Klemmvorrichtung (1) nach einem der vorhergehenden Ansprüche aufweist, die einerseits an ein Gestell (1001) und andererseits an das mindestens eine Fotovoltaikmodul (100) angebracht ist, so dass die erste und die zweite Klemmbacke der Klemmvorrichtung das mindestens eine Fotovoltaikmodul (100) klemmen.

## Claims

1. Clamping device (1) for photovoltaic module (100) comprising a first member (2) and a second member (3) which are intended to clamp the photovoltaic module, **characterized in that** the first member (2) comprises a first jaw (4) and a second jaw (5), the second member (3) comprises a first jaw (6) and a second jaw (7), the first jaws (4, 6) of the first and second members (2, 3) being arranged to clamp, between them, said photovoltaic module (100), and the second jaws (5, 7) of the first and second members (2, 3) being arranged to clamp, between them, said photovoltaic module (100),
and **in that**:
- the first member (2) is configured such that the first and second jaws (4, 5) of said first member (2) are movable with respect to one another,
- the second member (3) is configured such that the first and second jaws (6, 7) of said second member (3) are movable with respect to one another.

2. Device according to Claim 1, **characterized in that** the first and second jaws (4, 5) of the first member (2) are linked by a deformable linking element (8) of said first member (2), and **in that** the first and second jaws of said second member (3) are linked by a deformable linking element (9) of said second member (3).

3. Device according to the preceding claim, **characterized in that**, for each linking element (8, 9):
- said linking element (8, 9) comprises an elongation direction substantially parallel to an axis X,
- the first and second jaws (4, 5, 6, 7) linked by said linking element (8, 9) each comprise a bearing reference plane intended to come into contact with the photovoltaic module,
- the first jaw (4, 6) linked to said linking element (8, 9) comprises a degree of rotational freedom around an axis Z substantially parallel to the bearing reference plane of the second jaw (5, 7) linked to said linking element (8, 9), said axis Z being substantially orthogonal to said axis X.

4. Device according to the preceding claim, **characterized in that**, for each linking element (8, 9), the first and second jaws (4, 5, 6, 7) comprise a degree of rotational freedom around the corresponding axis X.

5. Device according to any one of Claims 2 to 4, **characterized in that** the linking elements (8, 9) of the first member (2) and of the second member (3) are made of elastomer.

6. Device according to the preceding claim, **characterized in that** the modulus of elasticity of said elastomer is comprised between 10 MPa and 500 MPa, and notably between 30 MPa and 100 MPa.

7. Device according to any one of Claims 2 to 4, **characterized in that** the linking elements (10, 13) are each formed by a blade comprising metal.

8. Device according to any one of the preceding claims, **characterized in that**, for each of the first and second members (2, 3), the first jaw is separated from the second jaw by a space (d1) comprised between 5 mm and 100 mm, and more specifically between 20 mm and 40 mm.

9. Device according to any one of the preceding claims, **characterized in that** it comprises a jaw clamping system (10) configured to cause the photovoltaic module to be clamped by the first and second jaws (4, 5, 6, 7) when said clamping system (10) is acted upon.

10. Device according to the preceding claim, **characterized in that** the clamping system (10) comprises separate first, second, third and fourth parts (10a, 10b, 10c, 10d), and **in that**:
- the first part (10a) comprises a face linked to the linking element (8) of the first member (2) and orientated towards the first jaw (4) of the first member (2), and a face orientated towards the third part (10c),
- the second part (10b) comprises a face linked to the linking element (8) of the first member (2) and orientated towards the second jaw (5) of the first member (2), and a face orientated towards the fourth part (10d),
- the third part (10c) comprises a face linked to the linking element (9) of the second member (3) and orientated towards the first jaw (6) of the second member (3), and a face orientated towards the first part (10a),
- the fourth part (10d) comprises a face linked to the linking element (9) of the second member (3) and orientated towards the second jaw (7) of the second member (3), and a face orientated towards the second part (10b),

11. Device according to the preceding claim, **characterized in that**:
- the first and the second jaws (4, 5) of the first member (2) are linked to a first side of the linking element (8) of the first member (2), and the first and second parts (10a, 10b) are linked to a second side of the linking element (8) of the second member (2), that is opposite said first side of the linking element (8) of the first member (2),
- the first and second jaws (6, 7) of the second member (3) are linked to a first side of the linking element (9) of the second member (3), and the third and fourth parts (10c, 10d) are linked to a second side of the linking element (9) of the second member (3), that is opposite said first side of the linking element (9) of the second member (3).

12. Device according to any one of Claims 10 to 11, **characterized in that** the first part (10a) comprises a through-opening (13) which is coaxial with a through-opening (14) of the third part (10c), and **in that** the second part (10b) comprises a through-opening (15) which is coaxial with a through-opening (16) of the fourth part (10d).

13. Device according to any one of Claims 1 to 9, **characterized in that** the first jaw (4) and the second jaw (5) of the first member (2) each comprise a sleeve (18, 19) into which part of the linking element (8) of the first member (2) is inserted, and **in that** the first and second jaws (6, 7) of the second member (3) are fixed on the same face of a plate, notably made of elastomer, forming the linking element (9) of the second member (3), the second member (3) comprising a first guiding channel (11) receiving the sleeve (18) of the first jaw (4) of the first member (2) and a second guiding channel (12) receiving the sleeve (19) of the second jaw (5) of the first member (2).

14. Photovoltaic installation comprising at least one photovoltaic module, **characterized in that** it comprises at least one clamping device (1) according to any one of the preceding claims, mounted on the one hand to a frame (1001), and on the other hand to said at least one photovoltaic module (100) such that the first and second jaws of said clamping device clamp said at least one photovoltaic module (100).
